# EUROPÄISCHE PATENTSCHRIFT

(11) **EP 1 223 077 B1**
(45) Veröffentlichungstag und Bekanntmachung des Hinweises auf die Patenterteilung: **09.10.2002**
(21) Anmeldenummer: 01100778.8
(22) Anmeldetag: 13.01.2001
(51) Int. Cl.: B60P 1/44

(54) **Hubladebühne**
Loading tailgate
Hayon élévateur

(43) Veröffentlichungstag der Anmeldung: 17.07.2002
(73) Patentinhaber: Bär, Gerd, 74078 Heilbronn (DE)
(72) Erfinder: Bär, Gerd, 74078 Heilbronn (DE)
(74) Vertreter: KOHLER SCHMID + PARTNER

(56) Entgegenhaltungen:
- EP-A- 0 541 421
- EP-A- 0 980 786
- DE-A- 19 545 908

## Beschreibung

Die Erfindung betrifft ein Hubladebühnensystem zur Befestigung an Fahrzeugen, mit einer Plattform und einem im wesentlichen parallelogrammförmigen Hubwerk zum Heben und Senken der Plattform, wobei das Hubwerk zwei horizontal beabstandete, mittels eines elastisch verformbaren Kräftestrangs miteinander verbundene Tragarme und einen asymmetrisch angeordneten, mit dem nächstliegenden ersten Tragarm zusammenwirkenden Hubzylinder umfaßt.

Ein derartiges Hubladebühnensystem ist beispielsweise durch die EP 0 980 786 A1 bekanntgeworden.

Bei diesem Hubladebühnensystem wirkt der aus Platzgründen asymmetrisch zum Hubwerk sitzende Hubzylinder zunächst auf einen Hubzylinderhebel ein. Durch die asymmetrische Lage des Hubzylinders sind zur Krafteinleitung in den nächstliegenden ersten Tragarm und in den sehr viel weiter entfernten zweiten Tragarm unterschiedliche elastische Verformungen gegeben. Diese unterschiedliche elastische Verformung führt zu einem Differenzdrehwinkel der beiden Tragarme. Der Hubzylinder greift am freien Ende des Hubzylinderhebels an, der um die gemeinsame Drehachse der beiden Tragarme schwenkbar gelagert ist und der mit dem Hubzylinder ein Kräftedreieck bildet. Die Übertragung der Drehbewegung und der Kräfte vom Hubzylinderhebel auf den ersten Tragarm erfolgt über eine unmittelbar zwischen ihnen gebildete drehfeste Verbindung und auf den zweiten Tragarm mittelbar durch ein Torsionsund Biegeprofil. Der erste Tragarm und der Hubzylinderhebel sind auf eine um die gemeinsame Drehachse schwenkbare Lagerbuchse aufgepreßt und miteinander nahe der gemeinsamen Drehachse über einen Distanzpaßbolzen mit zugehöriger Schraubverbindung drehfest verbunden.

Es ist die Aufgabe der Erfindung, ein Hubladebühnensystem der eingangs genannten Art weiter zu vereinfachen.

Diese Aufgabe wird erfindungsgemäß gelöst durch mindestens einen auf den Kräftestrang wirkenden Ausgleichszylinder, der die elastische Verformung des Kräftestrangs zumindest teilweise, vorzugsweise vollständig kompensiert.

Der mit der Erfindung erzielte Vorteil besteht darin, daß der bei der Kraftweiterleitung an den zweiten Tragarm aufgrund des elastisch verformbaren Kräftestrangs auftretende Drehwinkel nicht wie bei der EP 0 980 786 A1 durch einen Hubzylinderhebel, sondern hydraulisch durch den Ausgleichszylinder ausgeglichen wird. Der Ausgleichszylinder ist ein kleines, kostengünstiges Element, das an einem Tragarm bzw. an dem Kräftestrang über eine einfache Schraubverbindung befestigbar ist.

Bei besonders bevorzugten Ausführungsformen der Erfindung ist der mindestens eine Ausgleichszylinder an den Hydraulikkreislauf des Hubzylinders angeschlossen und so dimensioniert, daß er die elastische Verformung des Kräftestrangs möglichst bei jeder Belastung der Plattform vollständig kompensiert. Beispielsweise kann das Flächenverhältnis von Hubzylinder und Ausgleichszylinder so gewählt sein, daß mit steigender Belastung der Plattform und dadurch steigendem Hubzylinderdruck die elastische Verformung des Kräftestrangs durch das entsprechende Ausfahren des Ausgleichszylinders ausgeglichen wird. Damit laufen die beiden Tragarme in jedem Belastungszustand nahezu synchron. Die Zuführung der Hydraulikflüssigkeit zum Ausgleichszylinder kann direkt vom Hubzylinderhydraulikkreislauf aus erfolgen.

Der elastisch verformbare Kräftestrang ist bevorzugt durch ein über Verbindungselemente am zweiten Tragarm und am ersten Tragarm befestigtes Torsions- und Biegeprofil gebildet.

In einer bevorzugten Ausführungsform des erfindungsgemäßen Hubladebühnensystems sind der Kräftestrang und der zweite Tragarm relativ zueinander auslenkbar, wobei dazwischen ein Ausgleichszylinder wirkt. Dazu kann z.B. das dem zweiten Tragarm zugeordnete zweite Verbindungselement um die Drehachse der beiden Tragarme schwenkbar gelagert sein.

In einer weiteren erfindungsgemäßen Ausführungsform sind der Kräftestrang und der erste Tragarm relativ zueinander auslenkbar, wobei dazwischen ein Ausgleichszylinder wirkt.

Um die maximale Auslenkung zwischen Verbindungselement und erstem bzw. zweitem Tragarm zueinander zu begrenzen, können im Verbindungselement ein sich in Auslenkungsrichtung erstreckendes Langloch und im ersten bzw. zweiten Tragarms ein in das Langloch eingreifender Vorsprung oder umgekehrt vorgesehen sein. Die minimale Auslenkung ist durch den vollständig eingefahrenen Ausgleichszylinder bzw. ebenfalls durch das Langloch begrenzt.

Bei besonders bevorzugten Ausführungsformen der Erfindung ist das dem ersten Tragarm zugeordnete erste Verbindungselement um die Drehachse der beiden Tragarme schwenkbar gelagert und mit dem ersten Tragarm über eine Querverbindung verbunden, an der der Hubzylinder angreift. Die Querverbindung kann z.B. ein zwischen erstem Tragarm und erstem Verbindungselement fest eingespannter Gelenkbolzen sein, an dem der Hubzylinder schwenkbar gelagert ist.

Das erfindungsgemäße Hubladebühnensystem ermöglicht eine äußerst kostengünstige und leichte Bauweise mit geringen Herstellungskosten. Die beiden Tragarme sind ausgeschnittene Blechzuschnitte, die nur noch spanend Bohrungen erhalten.

Weitere Vorteile der Erfindung ergeben sich aus der Beschreibung und der Zeichnung. Ebenso können die vorstehend genannten und die noch weiter aufgeführten Merkmale erfindungsgemäß jeweils einzeln für sich oder zu mehreren in beliebigen Kombinationen Verwendung finden. Die gezeigte und beschriebene Ausführungsform ist nicht als abschließende Aufzählung zu verstehen, sondern hat vielmehr beispielhaften Charakter für die Schilderung der Erfindung.

Es zeigt:
- Fig. 1: schematisch das erfindungsgemäße Hubladebühnensystem mit der Plattform in einer mittleren Arbeitsstellung zwischen dem Ladeboden des LKWs und dem Erdboden, in der sich die beiden Tragarme in einer etwa waagerechten Position befinden; und
- Fig. 2: die Seitenansicht auf das Hubladebühnensystem entsprechend Richtung II in Fig. 1, wobei die Plattform in ihrer oberen und unteren Arbeitsstellung (gestrichelt) dargestellt ist.

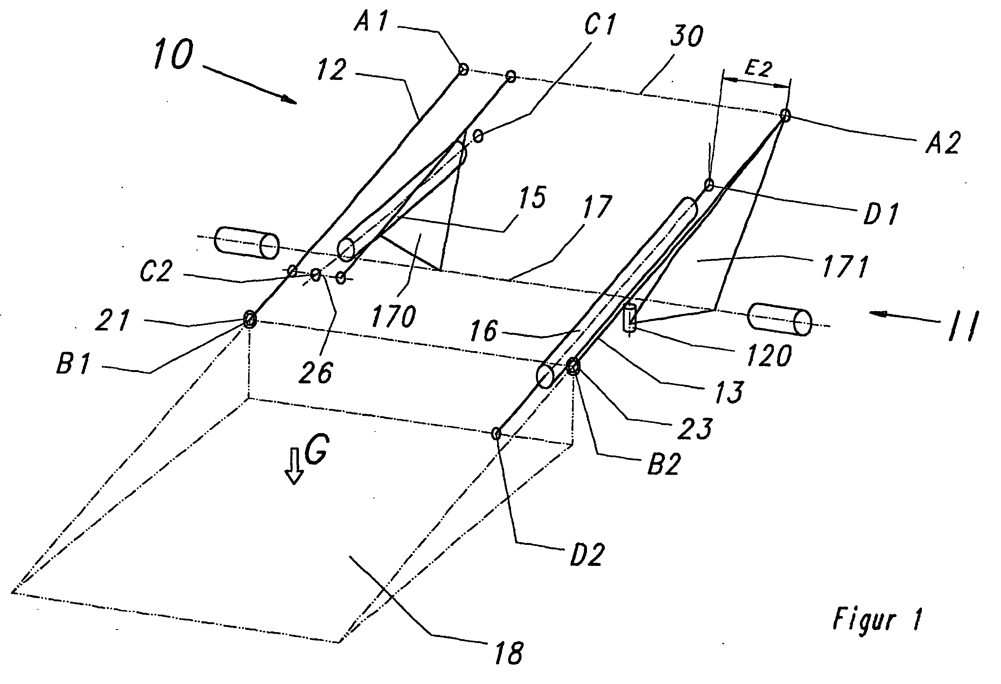

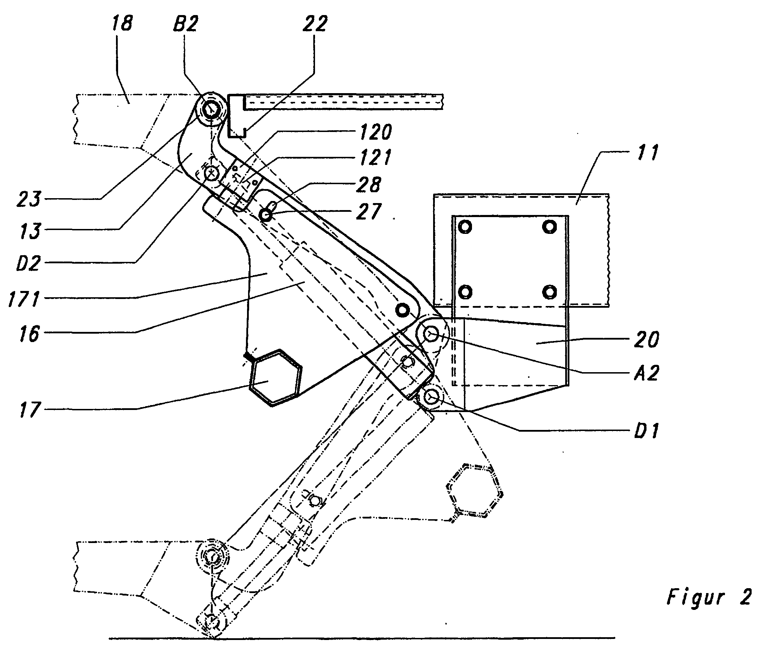

Bei dem in Fig. 1 schematisch gezeigten Hubladebühnensystem **10** ist auf die Darstellung der Befestigung am Fahrgestellrahmen **11** (Fig. 2) aus Übersichtsgründen verzichtet. Die die Plattform **18** tragenden Systempunkte sind fahrzeugseitig **A1, A2, C1, D1** und plattformseitig **B1, B2, C2, D2.**

Die Basiselemente des parallelogrammförmigen Hubwerks sind die beiden Tragarme **12** und **13,** die um die gemeinsame Drehachse **30** in den Drehpunkten A1 bzw. A2 schwenkbar gelagert sind. Zwischen den beiden Tragarmen 12, 13 ist nahe am ersten Tragarm 12 das erste Verbindungselement **170** schwenkbar um die Drehachse 30 gelagert, das anderenends über einen zur Drehachse 30 parallele starre Querverbindung **26** (z.B. ein fest eingespannter Gelenkbolzen) mit dem ersten Tragarm 12 verbunden ist. Zwischen erstem Tragarm 12 und erstem Verbindungselement 171 liegt der asymmetrisch zum Hubwerk angeordnete Hubzylinder **15**, der an einer fahrzeugseitig befestigten Anschraubkonsole (nicht gezeigt) im Drehpunkt **C1** einerseits und an der Querverbindung 26 im Drehpunkt **C2** andererseits befestigt ist. Diese Punkte C1, C2 und die gemeinsame Drehachse 30 bilden das Kräftedreieck für den Hubzylinder 15. Der zweite Tragarm **13** ist fahrzeugseitig an einer Anschraubkonsole 20 (Fig. 2) befestigt. Das Verbindungselement 170 und der zweite Tragarm 13 sind miteinander durch das Torsions- und Biegeprofil **17** verbunden, das am Verbindungselement 170 und am zweiten Tragarm 13 mittels des Verbindungselements **171** befestigt ist. Das Verbindungselement 171 ist einerseits um die Drehachse 30 schwenkbar gelagert, wodurch der zweite Tragarm 13 und das Verbindungselement 171 relativ zueinander auslenkbar sind, und andererseits mit einem sich in Auslenkungsrichtung erstreckenden Langloch **28** am Vorsprung **27** (z.B. Stehbolzen) des zweiten Tragarms 13 gelagert. Durch das Langloch 28 ist die Relativauslenkung des Verbindungselements 171 und des zweiten Tragarms 13 zueinander begrenzt. Der Vorsprung 27 hat einen nicht näher dargestellten Bund, der das Verbindungselement 171 und den zweiten Tragarm 13 parallel zueinander führt.

Das Ausfahren des Hubzylinders 15 führt zu einer Drehbewegung des ersten Tragarms 12 und des Verbindungselements 170 und über das Torsions- und Biegeprofil 17 und das Verbindungselement 171 auch zur gleichen Drehbewegung des zweiten Tragarms 13. Die beiden Verbindungselemente 170, 171 und das Biege- und Torsionsprofil 17 bilden einen elastisch verformbaren Kräftestrang. Der Parallelzylinder **16**, der fahrzeugseitig im Punkt D1 und an der Plattform 18 bei D2 angelenkt ist, hat Funktionen, wie das Verschwenken der Plattform 18 in eine vertikale Fahrtstellung etc., die allgemein bekannt sind und auf die daher hier nicht eingegangen wird. Er dient außerdem zur Parallelführung und ist dazu, nach innen um den Abstand **E2** horizontal versetzt, parallel zum zweiten Tragarm 13 angeordnet. Bei der Hub- und Senkbewegung der Plattform 18 wirkt der Parallelzylinder 16 als statische Druckstrebe. Der Versatz des Parallelzylinders 16 um den Abstand E2 gegenüber dem zweiten Tragarm 13 vermindert die Torsionsbelastung der entsprechend torsionssteif ausgebildeten Plattform 18 und übt daher eine stabilisierende Wirkung auf diese aus.

Bei unbelasteter Plattform erfährt der Kräftestrang so gut wie keine elastische Verformung. Um die leere Plattform 18 zu tragen, herrscht im Hubzylinder 15 ein Druck von ca. 30 bar. Der Ausgleichszylinder 120 ist mit diesem Hydraulikkreislauf des Hubzylinders 15 verbunden und steht daher unter demselben niederen Druck. Das Gewicht der Plattform 18 bzw. ein nicht näher dargestelltes Federelement sorgen dafür, daß bei diesem niederen Druck der Ausgleichszylinder 120 nicht ausfährt. Daher fahren die beiden Tragarme 12, 13 bei der Hubbewegung parallel hoch und schlagen mit ihren Lageraugen **21, 23** gleichzeitig am Heckschweller **22** an. Diese Situation ist in Fig. 2 gezeigt.

Wird jetzt allerdings die Funktion "Heben" weiterhin angesteuert, steigt der Druck im Hubzylinder 15 und im Ausgleichszylinder 120 weiter an. Der Hubzylinder 15 preßt den ersten Tragarm 12 gegen den Heckschweller 22, wodurch der Druck im Hydraulikkreislauf weiter steigt. Dadurch fährt nun auch der Ausgleichszylinder 120 aus und bewirkt eine Vorspannung des Kräftestrangs, welcher sich im elastischen Bereich verformt. Dadurch wird der zweite Tragarm 13 mit etwa gleich großer Kraft gegen den Heckschweller 22 gepreßt. Der Vorgang wird begrenzt durch die Länge des Langlochs 28.

Das Flächenverhältnis von Hubzylinder 15 und Ausgleichszylinder 120 ist so gewählt, daß mit steigender Last der Plattform 18 und dadurch steigendem Druck die elastische Verformung des Kräftestrangs durch das entsprechende Ausfahren des Ausgleichszylinders 120 ausgeglichen wird. Damit laufen die beiden Tragarme 12, 13 in jedem Belastungszustand nahezu synchron. Wenn die beiden Tragarme 12, 13 mit vollem hydraulischen Druck gegen den Heckschweller 22 gefahren sind, haben sie etwa die gleiche Vorspannung. Daraus resultiert ein gleichmäßiges Anliegen der beiden Lageraugen 21, 23. In Verbindung mit den vorhandenen Hubreserven ist damit sichergestellt, daß selbst bei einseitiger Beladung mit Nennlast die beiden Lageraugen 21, 23 und damit die Plattform 18 parallel am Heckschweller 22 anliegen.

Liegt die Last einseitig in Richtung B1, ist der erste Tragarm 12 stärker belastet als der zweite Tragarm 13. Aufgrund des hohen Drucks im Hubzylinder 15 und damit gleichzeitig im Ausgleichszylinder 120 fährt dieser aus. Da der zweite Tragarm 13 wenig Last hat, wird sich nicht der Kräftestrang elastisch verformen, sondern der zweite Tragarm 13 wird dem ersten Tragarm 12 vorauseilen. Daher wird in oberer Position der zweite Tragarm 13 mit seinem Lagerauge 23 zuerst am Heckschweller 22 anschlagen. Der Hubzylinder 15 führt den ersten Tragarm 12 unter entsprechender Vorspannung des Kräftestrangs ebenfalls mit seinem Lagerauge 21 gegen den Heckschweller 22, so daß eine spalt- und absatzfreie Anlage erfolgt.

Erfolgt die einseitige Beladung in Richtung B2, fährt der Ausgleichszylinder 120 mit seinem Kolben **121** (Fig. 2) entsprechend dem Druck des Hubzylinders 15 aus, d.h., die elastische Verformung im Kräftestrang und die daraus resultierenden Drehwinkeldifferenz des zweiten Tragarms 13 zum ersten Tragarm 12 werden durch den Kolben 121 des Ausgleichszylinders 120 kompensiert. Beide Tragarme 12, 13 fahren nahezu gleichzeitig mit ihren Lageraugen 21 und 23 gegen den Heckschweller 22.

Damit ist in beiden Fällen ein absatz- und spaltfreier Übergang von der Plattform 18 zum Heckschweller 22 gegeben. Damit nimmt dieses Hubladebühnensystem 10 in hohem Maße die praxisbedingten einseitigen Beladungen konstruktiv vorbestimmt auf und erreicht im Rahmen der zulässigen Tragfähigkeit immer spalt- und absatzfrei den Ladeboden des Fahrzeugs.

Bei einem Durchmesserverhältnis des Hubzylinderkolbens zum Ausgleichszylinderkolben von ca. 70 mm zu ca. 25 mm beträgt der mit dem Ausgleichszylinder 120 erreichbare Ausgleichshub etwa 8 mm. Im Vergleich zum Hubzylinder 15 ist der Ausgleichszylinder 120 ein kleines und einfaches Element. Das Gehäuse des Ausgleichszylinders 120 ist ein einfacher, quaderförmiger Aluminiumblock, der mit zwei Schrauben am zweiten Tragarm 13 befestigt ist. Auch die Zuführung der Hydraulikflüssigkeit zum Ausgleichszylinder 120 kann kostengünstig durch einen kleinen Schlauch direkt vom Hubzylinderanschluß aus erfolgen.

Im gezeigten Ausführungsbeispiel ist der Ausgleichszylinder 120 nahe dem Lager B2 angeordnet. In anderen nicht gezeigten Varianten ist der Ausgleichszylinder 120 bei entsprechender konstruktiver Gestaltung auch nahe des Lagers A2, A1 oder B1 angeordnet. Auch kann jedem Tragarm jeweils ein Ausgleichszylinder zugeordnet sein. Der bzw. die Ausgleichszylinder können über den Hydraulikkreislauf des Hubzylinders 15 oder über eine separate Hydrauliksteuerung angesteuert werden, die den Ausgleichshub entsprechend der jeweiligen Beladung der Plattform einstellt.

## Patentansprüche

1. Hubladebühnensystem (10) zur Befestigung an Fahrzeugen, mit einer Plattform (18) und einem im wesentlichen parallelogrammförmigen Hubwerk zum Heben und Senken der Plattform (18), wobei das Hubwerk zwei horizontal beabstandete, mittels eines elastisch verformbaren Kräftestrangs miteinander verbundene Tragarme (12, 13) und einen asymmetrisch angeordneten, mit dem nächstliegenden ersten Tragarm (12) zusammenwirkenden Hubzylinder (15) umfaßt, **gekennzeichnet durch** mindestens einen auf den Kräftestrang wirkenden Ausgleichszylinder (120), der die elastische Verformung des Kräftestrangs zumindest teilweise, vorzugsweise vollständig kompensiert.

2. Hubladebühnensystem nach Anspruch 1, **dadurch gekennzeichnet, daß** der mindestens eine Ausgleichszylinder (120) an den Hydraulikkreislauf des Hubzylinders (15) angeschlossen ist.

3. Hubladebühnensystem nach Anspruch 1 oder 2, **gekennzeichnet durch** eine für den mindestens einen Ausgleichszylinder (15) vorgesehene Hubbegrenzung.

4. Hubladebühnensystem nach einem der vorhergehenden Ansprüche, **dadurch gekennzeichnet, daß** der Kräftestrang durch ein über Verbindungselemente (170, 171) am ersten Tragarm (12) und am zweiten Tragarm (13) befestigtes Torsions- und Biegeprofil (17) gebildet ist.

5. Hubladebühnensystem nach einem der vorhergehenden Ansprüche, **dadurch gekennzeichnet, daß** der Kräftestrang und der zweite Tragarm (13) relativ zueinander auslenkbar sind und dazwischen ein Ausgleichszylinder (120) wirkt.

6. Hubladebühnensystem nach Anspruch 5, **dadurch gekennzeichnet, daß** das dem zweiten Tragarm (13) zugeordnete zweite Verbindungselement (171) um die Drehachse (30) der beiden Tragarme (12, 13) schwenkbar gelagert ist.

7. Hubladebühnensystem nach einem der vorhergehenden Ansprüche, **dadurch gekennzeichnet, daß** der Kräftestrang und der erste Tragarm (12) relativ zueinander auslenkbar sind und dazwischen ein Ausgleichszylinder wirkt.

8. Hubladebühnensystem nach einem der Ansprüche 4 bis 7, **gekennzeichnet durch** eine die maximale Auslenkung zwischen Verbindungselement (170; 171) und erstem bzw. zweitem Tragarm (12; 13) definierende Auslenkungsbegrenzung.

9. Hubladebühnensystem nach Anspruch 8, **dadurch gekennzeichnet, daß** die Auslenkungsbegrenzung durch ein sich in Auslenkungsrichtung erstreckendes Langloch (28) im Verbindungselement (170; 171) und durch einen in das Langloch (28) eingreifenden Vorsprung (27) des ersten bzw. zweiten Tragarms (12; 13) gebildet ist.

10. Hubladebühnensystem nach einem der vorhergehenden Ansprüche, **dadurch gekennzeichnet, daß** das dem ersten Tragarm (12) zugeordnete erste Verbindungselement (170) um die Drehachse (30) der beiden Tragarme (12, 13) schwenkbar gelagert und mit dem ersten Tragarm (12) über eine Querverbindung (26) verbunden ist, an der der Hubzylinder (15) angreift.

## Claims

1. Lifting loading platform system (10) for fixing to motor vehicles, with a platform (18) and an essentially parallelogram-shaped lift for raising and lowering the platform (18), the lift including two horizontally spaced support arms (12, 13) connected together by an elastically deformable forces compensator and an asymmetrically arranged lift cylinder (15), which acts together with the nearest first support arm (12), **characterised by** at least one compensation cylinder (120) acting on the forces compensator, which compensates at least partially, and preferably fully, for the elastic deformation of the forces compensator.

2. Lifting loading platform system according to Claim 1, **characterised in that** the at least one compensation cylinder (120) is connected to the hydraulic circuit of the lift cylinder (15).

3. Lifting loading platform system according to Claim 1 or 2, **characterised by** a stroke limitation provided for the at least one compensation cylinder (15).

4. Lifting loading platform system according to one of the preceding claims, **characterised in that** the forces compensator is formed by a torsion and bending profile (17) fixed by means of connecting elements (170, 171) to the first support arm (12) and to the second support arm (13).

5. Lifting loading platform system according to one of the preceding claims, **characterised in that** the forces compensator and the second support arm (13) can be articulated outward relative to one another and that a compensation cylinder (120) acts between them.

6. Lifting loading platform system according to Claim 5, **characterised in that** the second connecting element (171) assigned to the second support arm (13) is mounted so as to be able to swivel about the axis of rotation (30) of the two support arms (12, 13).

7. Lifting loading platform system according to one of the preceding claims, **characterised in that** the forces compensator and the first support arm (12) can be articulated outward relative to one another and that a compensation cylinder acts between them.

8. Lifting loading platform system according to one of Claims 4 to 7, **characterised by** an articulation limitation defining the maximum articulation between connecting elements (170; 171) and first or second support arm (12; 13) respectively.

9. Lifting loading platform system according to Claim 8, **characterised in that** the articulation limitation is formed by a slot (28) in the connecting element (170; 171) extending in the articulation direction and by a projection (27) engaging with the slot (28) of the first or second support arm (12; 13) respectively.

10. Lifting loading platform system according to one of the preceding claims, **characterised in that** the first connecting element (170) assigned to the first support arm (12) is mounted so as to be able to swivel about the axis of rotation (30) of the two support arms (12, 13) and is connected to the first support arm (12) by means of a transverse connection (26), on which the lift cylinder acts.

## Revendications

1. Système de hayon élévateur (10) destiné à être fixé sur des véhicules, comprenant une plate-forme (18) et un mécanisme de levage sensiblement en forme de parallélogramme pour lever et abaisser la plate-forme (18), le mécanisme de levage comprenant deux bras porteurs (12, 13) écartés en sens horizontal et reliés l'un à l'autre au moyen d'une ligne de force élastiquement déformable et un cylindre de levage (15) agencé de façon asymétrique et coopérant avec le premier bras porteur (12) situé le plus proche,
**caractérisé par** au moins un cylindre de compensation (120) qui agit sur la ligne de force et qui compense au moins partiellement et de préférence complètement la déformation élastique de la ligne de force.

2. Système de hayon élévateur selon la revendication 1, **caractérisé en ce que** ledit au moins cylindre de compensation (120) est raccordé au circuit hydraulique du cylindre de levage (15).

3. Système de hayon élévateur selon l'une ou l'autre des revendications 1 et 2, **caractérisé par** une limitation de course prévue pour ledit au moins un cylindre de compensation (15).

4. Système de hayon élévateur selon l'une des revendications précédentes, **caractérisé en ce que** la ligne de force est formée par un profilé de torsion et de flexion (17) fixé via des éléments de liaison (170, 171) sur le premier bras porteur (12) et sur le deuxième bras porteur (13).

5. Système de hayon élévateur selon l'une des revendications précédentes, **caractérisé en ce que** la ligne de force et le deuxième bras porteur (13) sont susceptibles de se débattre l'un par rapport à l'autre, et **en ce qu'**un cylindre de compensation (120) agit entre eux.

6. Système de hayon élévateur selon la revendication 5, **caractérisé en ce que** le deuxième élément de liaison (171) associé au deuxième bras porteur (13) est monté en pivotement autour de l'axe de rotation (30) des deux bras porteurs (12, 13).

7. Système de hayon élévateur selon l'une des revendications précédentes, **caractérisé en ce que** la ligne de force et le premier bras porteur (12) sont susceptibles de se débattre l'un par rapport à l'autre, et **en ce qu'**un cylindre de compensation agit entre eux.

8. Système de hayon élévateur selon l'une des revendications 4 à 7, **caractérisé par** une limitation de débattement qui définit le débattement maximum entre l'élément de liaison (170 ; 171) et le premier ou le deuxième bras porteur (12 ; 13).

9. Système de hayon élévateur selon la revendication 8, **caractérisé en ce que** la limitation de débattement est formée par un trou oblong (28) qui s'étend dans la direction de débattement dans l'élément de liaison (170 ; 171) et par une saillie (27), du premier ou du deuxième bras porteur (12 ; 13), qui s'engage dans le trou oblong (28).

10. Système de hayon élévateur selon l'une des revendications précédentes, **caractérisé en ce que** le premier élément de liaison (170) associé au premier bras porteur (12) est monté en pivotement autour de l'axe de rotation (30) des deux bras porteurs (12, 13), et est relié au premier bras porteur (12) au moyen d'une liaison transversale (26) sur laquelle attaque le cylindre de levage (15).
